# EUROPEAN PATENT APPLICATION

(11) **EP 4 694 456 A1**
(43) Date of publication of application: **11.02.2026**
(21) Application number: 23929532.2
(22) Date of filing: 31.03.2023
(51) Int. Cl.: H04W 72/0453

(54) **COMMUNICATION CONTROL METHOD AND APPARATUS**

(71) Applicant: Beijing Xiaomi Mobile Software Co., Ltd., Beijing 100085 (CN)
(72) Inventor: QIAO, Xuemei, Beijing 100085 (CN)
(74) Representative: Stöckeler, Ferdinand
(86) International application number: PCT/CN2023/085799
(87) International publication number: WO 2024/197949

(57) **Abstract**

Embodiments of the present disclosure provide a communication control method and apparatus, applied to a network device. The method comprises: allocating a physical downlink shared channel (PDSCH) frequency domain resource block (RB) to a user equipment (UE), wherein the PDSCH is a PDSCH used for bearing a multicast traffic channel (MTCH). According to the solution of the present disclosure, a network device can allocate reasonable frequency domain resources under multicast transmission, so that the effectiveness of the transmission is ensured, thereby improving the communication capability.

## Description

### TECHNICAL FIELD

The disclosure relates to the field of communication technologies, and in particular to a method and an apparatus for communication control.

### BACKGROUND

Communication between a network device and a terminal may be performed via a multicast traffic channel (MTCH). For example, a multicast broadcast service (MBS) message is transmitted to the terminal via the multicast traffic channel. Currently, how to determine a physical downlink shared channel (PDSCH) channel bandwidth for carrying multicast messages for an enhanced reduced capability (eRedCap) terminal has not been finalized.

### SUMMARY

Embodiments of the disclosure provide a method and an apparatus for communication control, so that a network device may allocate reasonable frequency domain resources in multicast transmission, thus improving communication capability.

In a first aspect, embodiments of the disclosure provide a method for communication control. The method is performed by a network device, including: allocating a frequency domain resource block (RB) for a physical downlink shared channel (PDSCH) to a user equipment (UE), in which the PDSCH is used for carrying a multicast traffic channel (MTCH).

In some embodiments, the UE includes a first UE and/or a second UE, the first UE is an enhanced reduced capability (eRedCap) UE, and the second UE is a non-eRedCap UE.

In some embodiments, allocating the frequency domain RB for the PDSCH to the UE includes: allocating a first frequency domain RB to the first UE and allocating a second frequency domain RB to the second UE, in which a number of first frequency domain RBs is less than or equal to a preset threshold, and the first frequency domain RB is different from the second frequency domain RB.

In some embodiments, the method further includes: configuring transmission parameters for the first UE and the second UE.

In some embodiments, configuring the transmission parameters for the first UE and the second UE includes any one of: configuring a first transmission parameter for the first UE and configuring a second transmission parameter for the second UE, in which the first transmission parameter and the second transmission parameter are different; or configuring a third transmission parameter for the first UE and the second UE, in which the third transmission parameter is shared by the first UE and the second UE.

In some embodiments, allocating the frequency domain RB to the first UE and the second UE includes: allocating a third frequency domain RB to the first UE and the second UE, in which the third frequency domain RB is shared by the first UE and the second UE.

In some embodiments, a number of third frequency domain RBs is less than or equal to a preset threshold.

In some embodiments, the method further includes: determining a first PDSCH processing delay of the first UE, in which the first PDSCH processing delay includes a plurality of PDSCH baseband processing delays and a physical uplink control channel (PUCCH) preparation delay of the first UE; and indicating, based on the first PDSCH processing delay, a hybrid automatic repeat request (HARQ) feedback delay to the first UE and/or the second UE, in which the HARQ feedback delay is greater than or equal to the first PDSCH processing delay.

In some embodiments, the method further includes: determining a second PDSCH processing delay of the second UE based on a protocol, in which there is an offset value X between the first PDSCH processing delay and the second PDSCH processing delay.

In a second aspect, embodiments of the disclosure provide a method for communication control. The method is performed by a UE, including: determining a frequency domain RB allocated by a network device for a PDSCH, in which the PDSCH is used for carrying a MTCH.

In some embodiments, the UE includes a first UE and/or a second UE, and determining the frequency domain RB allocated by the network device for a for the PDSCH includes: determining a first frequency domain RB allocated by the network device for the first UE and a second frequency domain RB allocated by the network device for the second UE, in which a number of first frequency domain RBs is less than or equal to a preset threshold, and the first frequency domain RB is different from the second frequency domain RB.

In some embodiments, the method further includes: determining transmission parameters configured by the network device.

In some embodiments, determining the transmission parameters configured by the network device includes any one of: determining a first transmission parameter configured by the network device for the first UE and a second transmission parameter configured by the network device for the second UE, in which the first transmission parameter and the second transmission parameter are different; or determining a third transmission parameter configured by the network device for the first UE and the second UE, in which the third transmission parameter is shared by the first UE and the second UE.

In some embodiments, the UE includes a first UE and/or a second UE, and determining the frequency domain RB allocated by the network device for the PDSCH includes: determining a third frequency domain RB allocated by the network device for the first UE and the second UE, in which the third frequency domain RB is shared by the first UE and the second UE.

In some embodiments, a number of third frequency domain RBs is less than or equal to a preset threshold.

In some embodiments, the method further includes: receiving a HARQ feedback delay indicated by the network device, in which the HARQ feedback delay is greater than or equal to a first PDSCH processing delay of the first UE, and the first PDSCH processing delay includes a plurality of PDSCH baseband processing delays and a PUCCH preparation delay of the first UE.

In some embodiments, the method further includes: sending, based on the HARQ feedback delay, a HARQ-negative acknowledgment (NACK) only feedback to the network device.

In some embodiments, the first UE is an eRedCap UE, and the second UE is a non-eRedCap UE.

In a third aspect, embodiments of the disclosure provide an apparatus for communication control. The apparatus is applied to a network device, including: an allocating module, configured to allocate a frequency domain RB for a PDSCH to a UE, in which the PDSCH is used for carrying a MTCH.

In a fourth aspect, embodiments of the disclosure provide an apparatus for communication control. The apparatus is applied to a UE, including: a determining module, configured to determine a frequency domain RB allocated by a network device for a PDSCH, in which the PDSCH is used for carrying a MTCH.

In a fifth aspect, embodiments of the disclosure provide a communication device. The communication device includes a transceiver; a memory; a processor connected to the transceiver and the memory respectively, configured to control wireless signal transmission and reception of the transceiver by executing computer-executable instructions stored in the memory, and enable the method as described in the first aspect or the method as described in the second aspect to be implemented.

In a sixth aspect, embodiments of the disclosure provide a computer-readable storage medium. The computer-readable storage medium is configured to store instructions. When the instructions are executed, the method as described in the first aspect or the method as described in the second aspect is implemented.

In a seventh aspect, embodiments of the disclosure provide a communication system. The communication system includes: a network device, configured to implement the method as described in the first aspect; and a UE, configured to implement the method as described in the second aspect.

Embodiments of the disclosure provide a method and an apparatus for communication control. The network device may allocate the frequency domain RB for the PDSCH to the UE, in which the PDSCH is used for carrying the MTCH. The solution of the disclosure enables the network device to allocate reasonable frequency domain resources in multicast transmission, ensures the transmission effectiveness, thus improving the communication capability.

### BRIEF DESCRIPTION OF THE DRAWINGS

In order to explain technical solutions in the embodiments of the disclosure or the related art more clearly, the accompanying drawings needed for use in the embodiments of the disclosure or in the related art are briefly introduced below.
FIG. 1 is a diagram illustrating an architecture of a communication system according to an embodiment of the disclosure.
FIG. 2 is a flow chart illustrating a method for communication control according to an embodiment of the disclosure.
FIG. 3 is a flow chart illustrating a method for communication control according to an embodiment of the disclosure.
FIG. 4 is a flow chart illustrating a method for communication control according to an embodiment of the disclosure.
FIG. 5 is a flow chart illustrating a method for communication control according to an embodiment of the disclosure.
FIG. 6 is a flow chart illustrating a method for communication control according to an embodiment of the disclosure.
FIG. 7 is a flow chart illustrating a method for communication control according to an embodiment of the disclosure.
FIG. 8 is a flow chart illustrating an interaction of a method for communication control according to an embodiment of the disclosure.
FIG. 9 is a block diagram illustrating an apparatus for communication control according to an embodiment of the disclosure.
FIG. 10 is a block diagram illustrating an apparatus for communication control according to an embodiment of the disclosure.
FIG. 11 is a block diagram illustrating a communication device according to an embodiment of the disclosure.
FIG. 12 is a block diagram illustrating a chip according to an embodiment of the disclosure.

### DETAILED DESCRIPTION

Reference is made in detail to the exemplary embodiments, examples of which are illustrated in the accompanying drawings. When the following description refers to the accompanying drawings, the same numerals in different figures refer to the same or similar elements unless otherwise indicated. The implementations described in the following exemplary embodiments do not represent all implementations consistent with the disclosure. Rather, they are merely examples of devices and methods consistent with some aspects of the disclosure as recited in the appended claims.

Terms used in the embodiments of the disclosure are for the purpose of describing specific embodiments only, and are not intended to limit the embodiments of the disclosure. As used in the examples of the disclosure and the appended claims, the singular forms "a/an" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the disclosure may use the terms first, second, third, and the like to describe various information, the information should not be limited to these terms. These terms are only used to distinguish between information of the same type. For example, without departing from the scope of the embodiments of the disclosure, first information may also be called second information, and similarly, second information may also be called first information. Depending on the context, the word "if" as used herein may be interpreted as "in a case that" or "when" or "in response to a determination". For the purposes of brevity and ease of understanding, the terms "greater than" or "less than", "higher than" or "lower than" are used herein to describe magnitude relationships. For those skilled in the field, it is understood that the term "greater than" also covers the meaning of "greater than or equal to", the term "less than" also covers the meaning of "less than or equal to", the term "higher than" covers the meaning of "higher than or equal to", and the term "lower than" covers the meaning of "lower than equal to".

To facilitate understanding, terms involved in the disclosure are first introduced.

Quality of Service (QoS) refers to a probability that a network meets a given service contract, or in many cases, is informally used to refer to a probability that packets pass between two points in the network. The QoS is a control mechanism which provides corresponding different priorities for different users or different data flows, or guarantees that the performance of data flows reaches a certain level based on an application requirement.

Positioning Reference Signal (PRS) is used for positioning measurement, and a positioning device may perform positioning based on a measurement result.

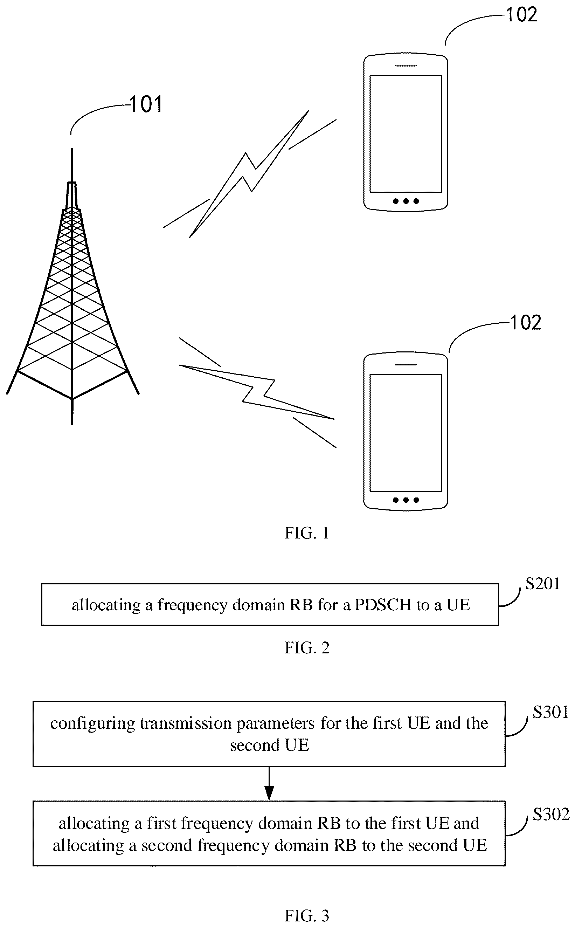

FIG. 1 is a diagram illustrating an architecture of a communication system according to an embodiment of the disclosure. The communication system may include, but is not limited to, one network device and one terminal. The number and forms of the devices illustrated in FIG. 1 are only for example and do not constitute a limitation to embodiments of the disclosure, and two or more network devices and two or more terminals may be included in practical applications. The communication system as illustrated in FIG. 1 includes one network device 101 and one terminal 102 for example.

It needs to be noted that the technical solutions in embodiments of the disclosure are applicable to various communication systems, such as a long term evolution (LTE) system, a 5th generation (5G) mobile communication system, a 5G new radio (NR) system or other future new mobile communication systems. It needs to further noted that sidelink in the embodiments of the disclosure may also be referred to as a side-link link or a direct link.

The network device 101 in embodiments of the disclosure is an entity, at a network side, for transmitting or receiving a signal. For example, the network device 101 may be an evolved NodeB (eNB), a transmission reception point (TRP), a next generation NodeB (gNB) in a NR system, a base station in other future mobile communication systems, an access node (AN) in a wireless fidelity (WiFi) system, or the like. A specific technology and a specific device form adopted by the network device 101 are not limited in embodiments of the disclosure. The network device 101 according to embodiments of the disclosure may consist of a central unit (CU) and distributed units (DUs). The CU may also be referred to as a control unit. Protocol layers of the network device, such as a base station, may be split by using a structure of CU-DU, where functions of a part of the protocol layers are placed in the CU for central control, and functions of a part or all of remaining protocol layers are distributed in the DUs, and the DUs are centrally controlled by the CU.

The terminal 102 in embodiments of the disclosure is an entity, at a user side, for receiving or transmitting a signal, for example, a mobile phone. The terminal may be referred to as a terminal device, a user equipment (UE), a mobile station (MS), a mobile terminal (MT), and the like. The terminal may be a device with a communication function, such as a vehicle, a smart vehicle, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, and the like. A specific technology and a specific device form adopted by the terminal are not limited in embodiments of the disclosure.

It should be understood that the communication system described in embodiments of the disclosure is intended to explain technical solutions of embodiments of the disclosure more clearly, and does not constitute a limitation to the technical solutions provided by embodiments of the disclosure. Those skilled in the art may know that, with evolution of a system architecture and emergence of a new service scenario, the technical solutions provided by embodiments of the disclosure are also applicable to similar technical problems.

It should be noted that in the disclosure, the method for communication control provided in any embodiment may be performed individually, or in combination with possible implementations of other embodiments, or in combination with any technical solution in the related art.

In existing research, a transmission bandwidth of a physical downlink shared channel (PDSCH) for carrying multicast messages for an enhanced reduced capability (eRedCap) UE is not defined. One possible approach is to specify a transmission bandwidth range for the eRedCap UE, for example, limiting a number of resource blocks (RBs) for a multicast traffic channel (MTCH) of the eRedCap UE to within 5 MHz. That is, for a 15/30 kHz subcarrier spacing, the number of RBs occupied by the PDSCH channel for carrying the multicast message for the eRedCap UE does not exceed 25/12 RBs. Thus, the solution of the disclosure enables the network device to allocate reasonable frequency domain resources in multicast transmission, ensures the transmission effectiveness, thus improving the communication capability. A method and an apparatus for communication control provided by the disclosure are described in detail below with reference to the accompanying drawings.

The method and the apparatus for communication control provided by the disclosure are described in detail below with reference to the accompanying drawings.

Referring to FIG. 2, FIG. 2 is a flow chart illustrating a method for communication control according to an embodiment of the disclosure. The method is performed by a network device. As shown in FIG. 2, the method includes but is not limited to the following step S201.

At S201: a frequency domain RB for a PDSCH is allocated to a UE.

Optionally, the UE includes a first UE and/or a second UE. The first UE may be an eRedCap UE, and the second UE may be a non-eRedCap UE. The specific type of the UE is not particularly limited in the disclosure. Optionally, the first UE may be one or more eRedCap UEs, and the second UE may be one or more non-eRedCap UEs. The disclosure does not limit the number of the UEs.

The eRedCap technology is an enhanced reduced capability technology proposed by the 3rd generation partnership project (3GPP) in the 5G Release 18 (R18) stage based on the RedCap technology proposed in the R17 stage. Thus, an eRedCap terminal is also referred to as an R18 RedCap terminal. It aims to further reduce the terminal complexity and cost, and comprehensively improve the 5G network quality and coverage. The non-eRedCap UE may be a traditional terminal, for example, a legacy terminal.

In some optional implementations, the network device may allocate the frequency domain RB for the PDSCH to the UE. That is, the network device may allocate corresponding frequency domain resources for different types of terminals. The PDSCH is used for carrying a multicast message.

In the embodiments of the disclosure, when allocating the frequency domain resources, the network device may adopt different allocation manners. That is, the network device may allocate frequency domain RBs to different types of terminals in different manners, such as allocating a separate frequency domain RBs to different types of terminals, or allocating a shared frequency domain RB to different types of terminals, or allocating a frequency domain RB in other allocation manners, which is not limited in the disclosure. Examples are provided below.

1) The separate frequency domain RBs are allocated to different types of terminals.

For example, the network device may allocate a first frequency domain RB to the first UE and allocate a second frequency domain RB to the second UE. A number of first frequency domain RBs is less than or equal to a preset threshold, and the first frequency domain RB is different from the second frequency domain RB. That is, when allocating the frequency domain RBs to different types of terminals, the network device may allocate different frequency domain RBs to the two different types of terminals.

The preset threshold may have different values based on different subcarrier spacing (SCS). For example, when an SCS is 30 KHz, the number of RBs for the PDSCH of the terminal does not exceed 12 RBs, that is, the preset threshold may be 12. When the SCS is 15 KHz, the number of RBs for the PDSCH of the terminal does not exceed 25 RBs, that is, the preset threshold may be 25.

It should be understood that the number of first frequency domain RBs being less than or equal to 12 or 25 may be understood as a corresponding transmission channel bandwidth being less than or equal to 5 MHz.

2) The same frequency domain RB is allocated to different types of terminals.

For example, the network device allocates a third frequency domain RB to the first UE and the second UE, in which the third frequency domain RB is shared by the first UE and the second UE. That is, when allocating the frequency domain RB to different types of terminals, the network device may allocate the same frequency domain RB to the two different types of terminals.

In the embodiments of the disclosure, the network device may allocate the frequency domain RB for the PDSCH to the UE, so that the network device may allocate reasonable frequency domain resources in multicast transmission, ensures the communication transmission effectiveness, thus improving the communication capability.

Referring to FIG. 3. FIG. 3 is a flow chart illustrating a method for communication control according to an embodiment of the disclosure. The method is performed by a network device. The embodiment shown in FIG. 3 provides further explanation of step S201 in the embodiment of FIG. 2. The method includes but is not limited to the following steps S301 to S302.

At S301: transmission parameters are configured for a first UE and a second UE.

In some optional implementations, when configuring the transmission parameters for the first UE and the second UE, the network device may adopt, including but not limited to, any one of the following manners: configuring different transmission parameters for different UEs, or configuring the same transmission parameter for different UEs. The transmission parameter may be a common frequency resource (CFR) or other parameters, which is not limited in the disclosure. Examples are provided below.

1) Different transmission parameters are configured for different UEs.

For example, the network device configures a first transmission parameter for the first UE and configures a second transmission parameter for the second UE. The first transmission parameter and the second transmission parameter are different. That is, the network device may configure separate transmission parameters for different UEs.

2) The same transmission parameter is configured for different UEs.

For example, the network device configures a third transmission parameter for the first UE and the second UE. The third transmission parameter is shared by the first UE and the second UE. That is, the network device may configure a shared transmission parameter for different UEs.

At S302: a first frequency domain RB is allocated to the first UE and a second frequency domain RB is allocated to the second UE.

In this embodiment, a number of first frequency domain RBs is less than or equal to a preset threshold, and the first frequency domain RB is different from the second frequency domain RB. That is, when allocating frequency domain RBs to different types of terminals, the network device may allocate different frequency domain RBs to the two different types of terminals. The preset threshold may be, but is not limited to, 12 or 25.

For example, when the preset threshold is 12, the network device may allocate a plurality of frequency domain RBs not exceeding the preset threshold to the first UE, such as allocating 10 frequency domain RBs as the first frequency domain RB for the exclusive use by the first UE. Meanwhile, the network device may allocate other frequency domain RBs except the first frequency domain RB to the second UE, such as allocating 20 frequency domain RBs as the second frequency domain RB for the exclusive use by the second UE.

In this embodiment of the disclosure, the network device configures the transmission parameters for the first UE and the second UE, and allocates different frequency domain RBs to the first UE and the second UE, which is beneficial to the functionality of communication transmission, thus improving the communication performance of multicast transmission.

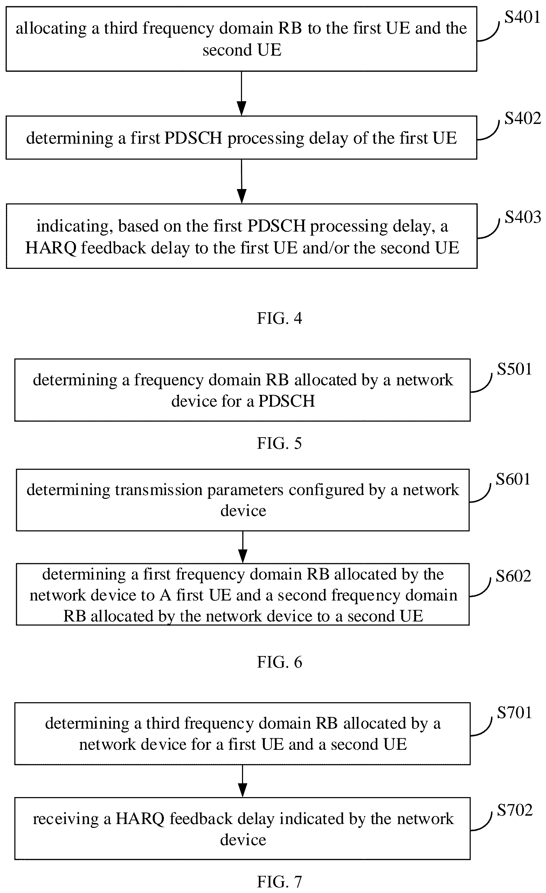

Referring to FIG. 4. FIG. 4 is a flow chart illustrating a method for communication control according to an embodiment of the disclosure. The method is performed by a network device. The embodiment shown in FIG. 4 provides further explanation of step S201 in the embodiment of FIG. 2. The method includes but is not limited to the following steps S401 to S403.

At S401: a third frequency domain RB is allocated to a first UE and a second UE.

In this embodiment, the network device allocates the third frequency domain RB to the first UE and the second UE. That is, the third frequency domain RB is shared by the first UE and the second UE. That is, when allocating the frequency domain RBs to different types of terminals, the network device may allocate the same frequency domain RB to each of the different types of terminals.

For example, the network device may allocate a plurality of frequency domain RBs to the first UE, such as allocating 18 frequency domain RBs as the third frequency domain RB for use by the first UE. Meanwhile, the network device may also allocate the third frequency domain RB to the second UE for use. That is, the third frequency domain RB may be shared by the first UE and the second UE. Optionally, a number of third frequency domain RBs is less than or equal to a preset threshold. The preset threshold may be 12 or 25.

It should be understood that if the number of third frequency domain RBs exceeds single processing capability of the first UE, that is, if the number of third frequency domain RBs is not less than or equal to the preset threshold, the first UE needs to perform a plurality of baseband processing procedures on the received PDSCH, including channel estimation, channel equalization, demodulation, etc., thus requiring an introduction of an additional processing delay. In this case, the method further includes the following optional steps.

At S402: a first PDSCH processing delay of the first UE is determined.

In some optional implementations, the network device determines the first PDSCH processing delay of the first UE. The first PDSCH processing delay includes a plurality of PDSCH baseband processing delays and a physical uplink control channel (PUCCH) preparation delay of the first UE.

That is, the network device may obtain the first PDSCH processing delay of the first UE by calculating the plurality of PDSCH baseband processing delays and the PUCCH preparation delay of the first UE.

In some optional implementations, a second PDSCH processing delay of the second UE is determined based on a protocol, in which there is an offset value X between the first PDSCH processing delay and the second PDSCH processing delay.

That is, the second PDSCH processing delay of the second UE may also be determined based on the protocol, and the offset value X is introduced to determine the first PDSCH processing delay more accurately. The specific offset value X may be defined as needed, which is not limited in the disclosure.

At S403: a hybrid automatic repeat request (HARQ) feedback delay is indicated to the first UE and/or the second UE based on the first PDSCH processing delay.

In some optional implementations, the network device indicates the HARQ feedback delay to the first UE and/or the second UE based on the first PDSCH processing delay, in which the HARQ feedback delay is greater than or equal to the first PDSCH processing delay. That is, the network device indicates a required delay to the first UE and/or the second UE, so that the first UE and/or the second UE obtains a processing time that meets its processing requirement.

In this embodiment of the disclosure, the network device determines the first PDSCH processing delay, so that the first UE and/or the second UE obtains the processing time that meets its processing requirement, which is beneficial to the functionality of communication transmission, thus improving the communication performance of multicast transmission.

Referring to FIG. 5. FIG. 5 is a flow chart illustrating a method for communication control according to an embodiment of the disclosure. The method is performed by a UE. In this embodiment, the UE includes a first UE and a second UE. The first UE may be an eRedCap UE, and the second UE may be a non-eRedCap UE. The specific UE type is not limited in embodiments of the disclosure. As shown in FIG. 5, the method includes but is not limited to the following step S501.

At S501: a frequency domain RB allocated by a network device for a PDSCH is determined.

In some optional implementations, the UE may determine the frequency domain RB allocated by the network device for the PDSCH. That is, the UE may determine the frequency domain RB belonging to the UE based on an allocation situation of the network device. The PDSCH is used for carrying a MTCH.

In the embodiments of the disclosure, as described in step 201, when allocating the frequency domain resources, the network device may adopt different allocation manners, such as allocating separate frequency domain RBs to different types of terminals, or allocating a shared frequency domain RB to different types of terminals, or allocating frequency domain RBs in other allocation manners. Correspondingly, for different allocation manners, the UE may perform corresponding confirmation.

1) For the separate frequency domain RBs allocated by the network device.

In this embodiment, the UE includes the first UE and the second UE. Correspondingly, the UE may determine a first frequency domain RB allocated by the network device for the first UE and a second frequency domain RB allocated by the network device for the second UE. A number of first frequency domain RBs is less than or equal to a preset threshold, and the first frequency domain RB is different from the second frequency domain RB.

2) For the shared frequency domain RB allocated by the network device.

In this embodiment, the UE includes the first UE and the second UE. Correspondingly, the UE may determine a third frequency domain RB allocated by the network device for the first UE and the second UE. The third frequency domain RB is shared by the first UE and the second UE.

In the embodiments of the disclosure, the UE may determine the frequency domain RB for the PDSCH allocated by the network device, so that the network device may allocate reasonable frequency domain resources in multicast transmission, ensures the communication transmission effectiveness, thus improving the communication capability.

Referring to FIG. 6. FIG. 6 is a flow chart illustrating a method for communication control according to an embodiment of the disclosure. The method is performed by a UE. The embodiment shown in FIG. 6 provides further explanation of step S501 in the embodiment of FIG. 5. The method includes but is not limited to the following steps S601 to S602.

At S601: transmission parameters configured by the network device are determined.

In the embodiments of the disclosure, as described in step 301, when configuring the transmission parameters for the first UE and the second UE, the network device may adopt, but not limited to, any one of the following manners: configuring different transmission parameters for different UEs, or configuring the same transmission parameter for different UEs. Correspondingly, for different transmission parameter configuration manners, the UE may perform corresponding confirmation. Examples are provided below.

1) Different transmission parameters are configured for different UEs.

In this embodiment, the UE includes the first UE and the second UE. Correspondingly, the UE may determine a first transmission parameter configured by the network device for the first UE and a second transmission parameter configured by the network device for the second UE. The first transmission parameter and the second transmission parameter are different.

2) The same transmission parameter is configured for different UEs.

In this embodiment, the UE includes the first UE and the second UE. Correspondingly, the UE may determine a third transmission parameter configured by the network device for the first UE and the second UE. The third transmission parameter is shared by the first UE and the second UE.

At S602: a first frequency domain RB allocated by the network device to the first UE and a second frequency domain RB allocated by the network device to the second UE are determined.

In this embodiment, a number of first frequency domain RBs is less than or equal to a preset threshold, and the first frequency domain RB is different from the second frequency domain RB. That is, the first UE and the second UE respectively determine the first frequency domain RB and the second frequency domain RB allocated by the network device.

In this embodiment of the disclosure, the UE determines the transmission parameters sent by the network device, and determines the different frequency domain RBs allocated to the first UE and the second UE by the network device, which is beneficial to the functionality of communication transmission, thus improving the communication performance of multicast transmission.

Referring to FIG. 7. FIG. 7 is a flow chart illustrating a method for communication control according to an embodiment of the disclosure. The method is performed by a UE. The embodiment shown in FIG. 7 provides further explanation of step S501 in the embodiment of FIG. 5. The method includes but is not limited to the following steps S701 to S702.

At S701: a third frequency domain RB allocated by the network device to the first UE and the second UE is determined.

In this embodiment, the UE includes the first UE and the second UE. Correspondingly, the UE may determine the third frequency domain RB allocated by the network device to the first UE and the second UE. The third frequency domain RB is shared by the first UE and the second UE. That is, UEs may share the same frequency domain RB. Optionally, a number of third frequency domain RBs is less than or equal to a preset threshold.

It should be understood that if the number of third frequency domain RBs exceeds single processing capability of the first UE, that is, if the number of third frequency domain RBs is not less than or equal to the preset threshold, the first UE needs to separately process the received third frequency domain RBs, thus requiring an introduction of an additional processing delay. In this case, the method further includes the following optional steps.

At S702: a HARQ feedback delay indicated by the network device is received.

In some optional implementations, the UE receives the HARQ feedback delay indicated by the network device. The HARQ feedback delay is greater than or equal to a first PDSCH processing delay of the first UE. The first PDSCH processing delay includes a plurality of baseband processing delays and a PUCCH preparation delay of the first UE.

In some optional implementations, the UE sends, based on the HARQ feedback delay, a HARQ-negative acknowledgment (NACK) only feedback to the network device. That is, if the UE successfully receives the PDSCH, no feedback is sent; if the UE fails to receive the PDSCH, a NACK is fed back.

In this embodiment of the disclosure, the UE obtains the processing time that meets its processing requirement based on the first PDSCH processing delay determined by the network device, which is beneficial to the functionality of communication transmission, thus improving the communication performance of multicast transmission.

In the above embodiments provided in the disclosure, description is made to the method in the embodiments of the disclosure from the perspectives of the network device and the UE respectively. In order to realize each of functions in the method of the above embodiments of the disclosure, the network device and the UE may include a hardware structure, a software module, and realize each of the above functions in the form of the hardware structure, the software module, or a combination of the hardware structure and the software module. A certain function of the above functions may be executed in the form of the hardware structure, the software module, or the combination of the hardware structure and the software module.

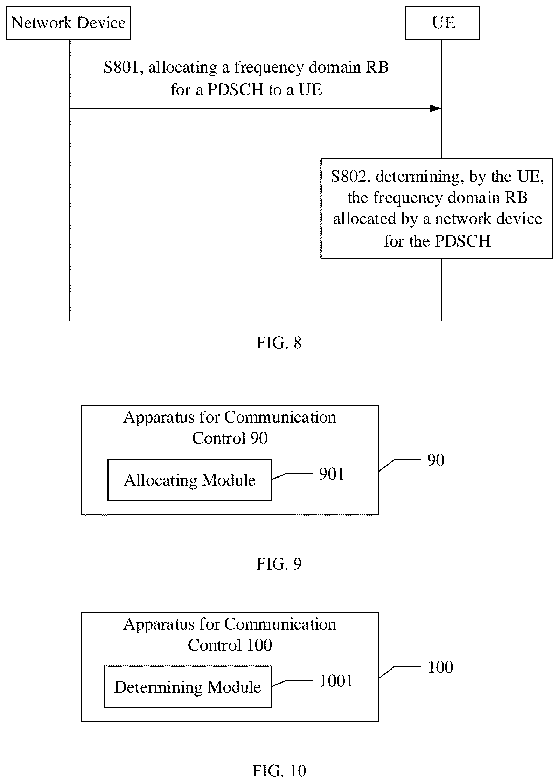

FIG. 8 is a flow chart illustrating an interaction of a method for communication control according to an embodiment of the disclosure. The method is performed by a communication system, and the communication system includes a network device and a UE. The method includes the following steps S801 to S802.

At S801: a frequency domain RB for a PDSCH is allocated to a UE.

At S802: the UE determines the frequency domain RB allocated by the network device for the PDSCH.

For detailed explanations of the above steps S801 to S802, reference may be made to the embodiments described in FIG. 2 to FIG. 7, which are not repeated here.

Referring to FIG. 9. FIG. 9 is a block diagram illustrating an apparatus 900 for communication control according to an embodiment of the disclosure. The apparatus 900 shown in FIG. 9 is applied to a network device. The apparatus 900 may include an allocating module 901.

The allocating module 901 is configured to allocate a frequency domain RB for a PDSCH to a UE, in which the PDSCH is used for carrying a MTCH.

Optionally, the UE includes a first UE and/or a second UE, the first UE is an eRedCap UE, and the second UE is a non-eRedCap UE.

Optionally, when allocating the frequency domain RB for the PDSCH to the UE, the allocating module 901 is further configured to allocate a first frequency domain RB to the first UE and allocate a second frequency domain RB to the second UE, in which a number of first frequency domain RBs is less than or equal to a preset threshold, and the first frequency domain RB is different from the second frequency domain RB.

Optionally, the allocating module 901 is further configured to configure transmission parameters for the first UE and the second UE.

Optionally, when configuring the transmission parameters for the first UE and the second UE, the allocating module 901 is further configured to perform any one of: configuring a first transmission parameter for the first UE and configuring a second transmission parameter for the second UE, in which the first transmission parameter and the second transmission parameter are different; or configuring a third transmission parameter for the first UE and the second UE, in which the third transmission parameter is shared by the first UE and the second UE.

Optionally, when allocating the frequency domain RB for the PDSCH to the UE, the allocating module 901 is further configured to allocate a third frequency domain RB to the first UE and the second UE, in which the third frequency domain RB is shared by the first UE and the second UE.

Optionally, a number of third frequency domain RBs is less than or equal to a preset threshold.

Optionally, the allocating module 901 is further configured to determine a first PDSCH processing delay of the first UE, in which the first PDSCH processing delay includes a plurality of PDSCH baseband processing delays and a PUCCH preparation delay of the first UE; and indicate, based on the first PDSCH processing delay, a HARQ feedback delay to the first UE and/or the second UE, in which the HARQ feedback delay is greater than or equal to the first PDSCH processing delay.

Optionally, the allocating module 901 is further configured to determine a second PDSCH processing delay of the second UE based on a protocol, in which there is an offset value X between the first PDSCH processing delay and the second PDSCH processing delay.

Referring to FIG. 10, FIG. 10 is a block diagram illustrating an apparatus 100 for communication control according to an embodiment of the disclosure. The apparatus 100 shown in FIG. 10 is applied to a UE. The apparatus 100 may include a determining module 1001.

The determining module 1001 is configured to determine a frequency domain RB for a PDSCH allocated by a network device, in which the PDSCH is used for carrying a MTCH.

Optionally, the UE includes a first UE and/or a second UE, and when determining the frequency domain RB allocated by a network device for a PDSCH, the determining module 1001 is further configured to determine a first frequency domain RB allocated by the network device to the first UE and a second frequency domain RB allocated by the network device to the second UE, in which a number of first frequency domain RBs is less than or equal to a preset threshold, and the first frequency domain RB is different from the second frequency domain RB.

Optionally, the determining module 1001 is further configured to determine transmission parameters configured by the network device.

Optionally, the determining module 1001 is further configured to determine the transmission parameters configured by the network device by any one of: determining a first transmission parameter configured by the network device for the first UE and a second transmission parameter configured by the network device for the second UE, in which the first transmission parameter and the second transmission parameter are different; or determining a third transmission parameter configured by the network device for the first UE and the second UE, in which the third transmission parameter is shared by the first UE and the second UE.

Optionally, the UE includes a first UE and/or a second UE, and when determining the frequency domain RB allocated by a network device for the PDSCH, the determining module 1001 is further configured to determine a third frequency domain RB allocated by the network device to the first UE and the second UE, in which the third frequency domain RB is shared by the first UE and the second UE.

Optionally, a number of third frequency domain RBs is less than or equal to a preset threshold.

Optionally, the determining module 1001 is further configured to receive a HARQ feedback delay indicated by the network device, in which the HARQ feedback delay is greater than or equal to a first PDSCH processing delay of the first UE, and the first PDSCH processing delay includes a plurality of baseband processing delays and a PUCCH preparation delay of the first UE. When determining whether to perform resource reselection based on a value of a SL PRS resource reselection counter, the second determination module 702 is further configured to determine to perform resource reselection when the value of the SL PRS resource reselection counter is 0.

Optionally, the determining module 1001 is further configured to send, based on the HARQ feedback delay, a HARQ-NACK only feedback to the network device.

Optionally, the first UE is an eRedCap UE, and the second UE is a non-eRedCap UE.

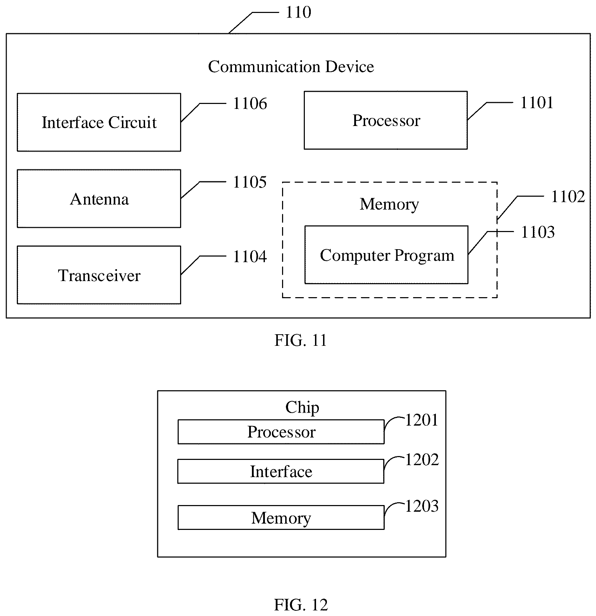

Referring to FIG. 11, FIG. 11 is a block diagram illustrating a communication device 110 according to an embodiment of the disclosure. The communication device 110 may be a network device, a terminal, a chip, a system on chip or a processor that supports the network device to implement the above method, or a chip, a system on chip or a processor that supports the terminal to implement the above method. The communication device 110 may be configured to implement the methods described in the method embodiments, and for details reference may be made to the descriptions in the method embodiments.

The communication device 110 may include one or more processors 1101. The processor 1101 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU or CU, or the like), to execute a computer program, and process data of the computer program.

Optionally, the communication device 110 may further include one or more memories 1102 with a computer program 1103 stored thereon. The computer program 1103 is executed by the processor 1101 so that the communication device 110 performs the method as described in the above method embodiments. Optionally, the memory 1102 may further store data. The communication device 110 and the memory 1102 may be disposed separately or integrated together.

Optionally, the communication device 110 may further include a transceiver 1104 and an antenna 1105. The transceiver 1104 may be referred to as a transceiving unit or a transceiving circuit, which may be configured to achieve a transceiving function. The transceiver 1104 may include a receiver and a transmitter. The receiver may be referred to as a receiving machine, a receiving circuit, or the like, for implementing a receiving function; the transmitter may be referred to as a transmitting machine, a transmitting circuit, or the like, for implementing a transmitting function.

Optionally, the communication device 110 may further include one or more interface circuits 1106. The interface circuit 1106 is configured to receive code instructions and transmit the code instructions to the processor 1101. The code instructions are executed by the processor 1101 so that the communication device 110 performs the method as described in the above method embodiments.

If the communication device 110 is a terminal, the communication device 110 is configured to implement functions of the terminal in the foregoing embodiments.

If the communication device 110 is a network device, the communication device 110 is configured to implement functions of the network device in the foregoing embodiments.

In an implementation, the processor 1101 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1101 may be stored with a computer program 1103. The computer program 1103 is running on the processor 1101 so that the communication device 110 performs the method as described in the above method embodiments. The computer program 1103 may be solidified in the processor 1101, in which case the processor 1101 may be implemented by hardware.

In an implementation, the communication device 110 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, or the like. The processor and the transceiver may further be manufactured by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a network device or a terminal, but the scope of the communication device described in the disclosure is not limited thereto, and a structure of the communication device may not be limited by FIG. 11. The communication device may be an independent device or may be a part of a larger device. For example, the communication device may be the following:
(1) an independent integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded in other devices;
(5) a receiver, a terminal, a smart terminal device, a cellular phone, a wireless device, a handset, a mobile unit, a vehicle-mounted device, a network device, a cloud device, an artificial intelligence device, etc.;
(6) others, and so forth.

For the case that the communication device may be a chip or a system on chip, reference may be made to FIG. 12, FIG. 12 is a block diagram illustrating a chip according to an embodiment of the disclosure. The chip illustrated in FIG. 12 includes a processor 1201 and an interface 1202. There may be one or more processors 1201 and there may be a plurality of interfaces 1202.

Embodiments of the disclosure further provide a chip and reference may be made to FIG. 12, FIG. 12 is a block diagram illustrating a chip according to an embodiment of the disclosure. The chip illustrated in FIG. 12 includes a processor 1201 and an interface 1202. There may be one or more processors 1201 and a plurality of interfaces 1202. Optionally, the chip further includes a memory 1203, configured to save computer instructions. When the processor 1201 executes the computer instructions, an electronic device is caused to perform the method for communication control described in the embodiments above in the disclosure.

Those skilled in the related art may understand that various illustrative logical blocks and steps listed in embodiments of the disclosure, may be implemented by electronic hardware, computer software or a combination of electronic hardware and computer software. Whether such a function is implemented by hardware or software depends on specific applications and a design requirement for an overall system. Those skilled in the art may implement the functions by using various methods for each specific application, but such an implementation should not be understood as beyond the protection scope of embodiments of the disclosure.

An embodiment of the disclosure further provides a communication system. The system includes a communication apparatus functioning as the terminal in the aforementioned embodiments of FIG. 1 to FIG. 7 and a communication apparatus functioning as the network device in the aforementioned embodiment of FIG. 1 to FIG. 7, or the system includes a communication device functioning as the terminal in the aforementioned embodiment of FIG. 11 and a communication device functioning as the network device in the aforementioned embodiment of FIG. 11.

A readable storage medium with instructions stored is further provided in the disclosure. When the instructions are executed by a computer, steps in the any one method embodiment are implemented.

A computer program product is further provided in the disclosure. The computer program product implements functions of the above any one method embodiment when executed by a processor.

In the above embodiments, functions may be wholly or partially implemented by software, hardware, firmware, or any combination of them. When implemented by software, the functions may be implemented in whole or in part in a form of a computer program product. The computer program product includes one or more computer programs. Procedures or functions according to the embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by the computer or a data storage device such as a server that integrates one or more of the available media, and a data center. The computer-readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, and are not intended to limit the scope of the embodiments of the disclosure, but also not to indicate an order of precedence.

The phase "at least one" in the disclosure may also be described as one or more, and the phase "a plurality of" may refer to two, three, four or more, which is not limited in the disclosure. In the embodiments of the disclosure, for a kind of technical feature, technical features in the kind of technical feature are distinguished by "first", "second", "third", "A", "B", "C", "D", and the like, and there is no order of precedence or magnitude between the technical features described by "first", "second", "third", "A", "B", "C" and "D".

Corresponding relationships indicated by tables in the disclosure may be configured or predefined. A value of information in the tables is only an example, and may be configured as other values, which is not limited in the disclosure. When corresponding relationships between information and parameters are configured, it is not always necessary to configure all corresponding relationships indicated in the tables. For example, in the tables in the disclosure, the corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps, hash tables or the like may be used.

The term "predefined" in the disclosure may be understood as defined, predefined, stored, pre-stored, pre-negotiated, pre-configured, solidified or pre-burned.

Those skilled in the related art may realize that, in combination with units and algorithm steps of the examples described in embodiments of the disclosure, may be implemented by electronic hardware or a combination of electronic hardware and computer software. Whether the functions are executed by hardware or software depends on a specific application and a design constraint of technical solutions. Those skilled in the art may adopt different methods for each specific application to implement the described functions, but such implementation should not be considered as going beyond the scope of the disclosure.

Those skilled in the art may clearly understand that for a specific working process of a system, an apparatus and a unit described above reference may be made to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the disclosure. Thus, the protection scope of the disclosure shall be subject to the protection scope of claims.

## Claims

1. A method for communication control, performed by a network device, comprising:
allocating a frequency domain resource block (RB) for a physical downlink shared channel (PDSCH) to a user equipment (UE),
wherein the PDSCH is used for carrying a multicast traffic channel (MTCH).

2. The method according to claim 1, wherein the UE comprises a first UE and/or a second UE, the first UE is an enhanced reduced capability (eRedCap) UE, and the second UE is a non-eRedCap UE.

3. The method according to claim 2, wherein allocating the frequency domain RB for the PDSCH to the UE comprises:
allocating a first frequency domain RB to the first UE and allocating a second frequency domain RB to the second UE,
wherein a number of first frequency domain RBs is less than or equal to a preset threshold, and the first frequency domain RB is different from the second frequency domain RB.

4. The method according to claim 3, further comprising:
configuring transmission parameters for the first UE and the second UE.

5. The method according to claim 4, wherein configuring the transmission parameters for the first UE and the second UE comprises any one of:
configuring a first transmission parameter for the first UE and configuring a second transmission parameter for the second UE, wherein the first transmission parameter and the second transmission parameter are different; or
configuring a third transmission parameter for the first UE and the second UE, wherein the third transmission parameter is shared by the first UE and the second UE.

6. The method according to claim 2, wherein allocating the frequency domain RB for the PDSCH to the UE comprises:
allocating a third frequency domain RB to the first UE and the second UE,
wherein the third frequency domain RB is shared by the first UE and the second UE.

7. The method according to claim 6, wherein a number of third frequency domain RBs is less than or equal to a preset threshold.

8. The method according to claim 6, further comprising:
determining a first PDSCH processing delay of the first UE, wherein the first PDSCH processing delay comprises a plurality of PDSCH baseband processing delays and a physical uplink control channel (PUCCH) preparation delay of the first UE; and
indicating, based on the first PDSCH processing delay, a hybrid automatic repeat request (HARQ) feedback delay to the first UE and/or the second UE, wherein the HARQ feedback delay is greater than or equal to the first PDSCH processing delay.

9. The method according to claim 8, further comprising:
determining a second PDSCH processing delay of the second UE based on a protocol, wherein there is an offset value X between the first PDSCH processing delay and the second PDSCH processing delay.

10. A method for communication control, performed by a user equipment (UE), comprising:
determining a frequency domain resource block (RB) allocated by a network device for a physical downlink shared channel (PDSCH),
wherein the PDSCH is used for carrying a multicast traffic channel (MTCH).

11. The method according to claim 10, wherein the UE comprises a first UE and/or a second UE, and determining the frequency domain RB allocated by a network device for the PDSCH comprises:
determining a first frequency domain RB allocated by the network device for the first UE and a second frequency domain RB allocated by the network device for the second UE,
wherein a number of first frequency domain RBs is less than or equal to a preset threshold, and the first frequency domain RB is different from the second frequency domain RB.

12. The method according to claim 11, further comprising:
determining transmission parameters configured by the network device.

13. The method according to claim 12, wherein determining the transmission parameters configured by the network device comprises any one of:
determining a first transmission parameter configured by the network device for the first UE and a second transmission parameter configured by the network device for the second UE, wherein the first transmission parameter and the second transmission parameter are different; or
determining a third transmission parameter configured by the network device for the first UE and the second UE, wherein the third transmission parameter is shared by the first UE and the second UE.

14. The method according to claim 10, wherein the UE comprises a first UE and/or a second UE, and determining the frequency domain RB allocated by a network device for the PDSCH comprises:
determining a third frequency domain RB allocated by the network device for the first UE and the second UE,
wherein the third frequency domain RB is shared by the first UE and the second UE.

15. The method according to claim 14, wherein a number of third frequency domain RBs is less than or equal to a preset threshold.

16. The method according to claim 14, further comprising:
receiving a hybrid automatic repeat request (HARQ) feedback delay indicated by the network device,
wherein the HARQ feedback delay is greater than or equal to a first PDSCH processing delay of the first UE, and the first PDSCH processing delay comprises a plurality of PDSCH baseband processing delays and a physical uplink control channel (PUCCH) preparation delay of the first UE.

17. The method according to claim 16, further comprising:
sending, based on the HARQ feedback delay, a HARQ-negative acknowledgment (NACK) only feedback to the network device.

18. The method according to any one of claims 11 to 17, wherein the first UE is an enhanced reduced capability (eRedCap) UE, and the second UE is a non-eRedCap UE.

19. An apparatus for communication control, applied to a network device, comprising:
an allocating module, configured to allocate a frequency domain resource block (RB) for a physical downlink shared channel (PDSCH) to a user equipment (UE),
wherein the PDSCH is used for carrying a multicast traffic channel (MTCH).

20. An apparatus for communication control, applied to a user equipment (UE), comprising:
a determining module, configured to determine a frequency domain resource block (RB) for a physical downlink shared channel (PDSCH) allocated by a network device,
wherein the PDSCH is used for carrying a multicast traffic channel (MTCH).

21. A communication device, comprising:
a transceiver;
a memory; and
a processor, connected to the transceiver and the memory respectively, configured to control wireless signal transmission and reception of the transceiver by executing computer-executable instructions stored in the memory, and enable the method according to any one of claims 1 to 18 to be implemented.

22. A computer storage medium, storing computer-executable instructions which, when executed by a processor, enable the method according to any one of claims 1 to 18 to be implemented.

23. A communication system, comprising:
a network device, configured to implement the method according to any one of claims 1 to 9; and
a user equipment (UE), configured to implement the method according to any one of claims 10 to 18.
